# EUROPÄISCHE PATENTSCHRIFT

(11) **EP 2 450 531 B1**
(45) Veröffentlichungstag und Bekanntmachung des Hinweises auf die Patenterteilung: **15.05.2013**
(21) Anmeldenummer: 10189974.8
(22) Anmeldetag: 04.11.2010
(51) Int. Cl.: F01D 5/08, F01D 5/18, F01D 9/04, F01D 9/06, F02C 7/141, F02C 7/16, F02C 7/18, F04D 29/58, F04D 29/053

(54) **Axialverdichterkühlung**
Cooling of an axial compressor
Refroidissement d'une compresseur axial

(43) Veröffentlichungstag der Anmeldung: 09.05.2012
(73) Patentinhaber: Siemens Aktiengesellschaft, 80333 München (DE)
(72) Erfinder: Benkler, Francois, 40880 Ratingen (DE); Dungs, Sascha, 46485 Wesel (DE); Hoell, Harald, 63607 Wächtersbach (DE)

(56) Entgegenhaltungen:
- EP-A1- 0 735 255
- EP-A1- 1 640 587
- EP-A2- 1 074 694
- DE-C1- 3 606 597
- US-A1- 2004 148 943
- US-A1- 2009 324 388

## Beschreibung

Die Erfindung betrifft einen Axialverdichter für eine Gasturbinen zur Verdichtung eines Strömungsmediums mit einer Mehrzahl von zu Leitschaufelreihen zusammengefassten, jeweils an einem Leitschaufelträger befestigten Verdichterleitschaufeln und mit einer Mehrzahl von zu Laufschaufelreihen zusammengefassten, jeweils an einer Verdichterscheibe einer Verdichterwelle befestigten Verdichterlaufschaufeln, wobei je zwei aufeinander folgende Verdichterscheiben einen dazwischen liegenden Hohlraum umschließen, und wobei die in Strömungsrichtung des Strömungsmediums gesehen letzte Verdichterscheibe einen hinteren Hohlraum begrenzt.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Brennkammer verbrannt, wobei von einem Luftverdichter verdichtete Luft zugeführt wird. Der Luftverdichter ist dabei üblicherweise als Axialverdichter ausgeführt. Das in der Brennkammer durch die Verbrennung des Brennstoffs erzeugte, unter hohem Druck und unter hoher Temperatur stehende Arbeitsmedium wird dabei über eine der Brennkammer nachgeschaltete Turbineneinheit geführt, wo es sich arbeitsleistend entspannt. Der Luftverdichter, kurz Verdichter, und die Turbineneinheit sind üblicherweise auf einer gemeinsamen Welle angeordnet, so dass im Betrieb die Turbineneinheit den Verdichter antreibt.

Die Brennkammer der Gasturbine kann als so genannte Ringbrennkammer ausgeführt sein, bei der eine Vielzahl von in Umfangsrichtung um die Turbinenwelle herum angeordneten Brennern in einen gemeinsamen, von einer hochtemperaturbeständigen Umfassungswand umgebenen Brennkammerraum mündet. Dazu ist die Brennkammer in ihrer Gesamtheit als ringförmige Struktur ausgestaltet. Neben einer einzigen Brennkammer kann auch eine Mehrzahl von Brennkammern vorgesehen sein.

Zur Erzeugung der Rotationsbewegung der Turbinenwelle ist dabei an dieser eine Anzahl von üblicherweise in Schaufelgruppen oder Schaufelreihen zusammengefassten Turbinenlaufschaufeln angeordnet. Dabei ist üblicherweise für jede Turbinenstufe eine Turbinenscheibe vorgesehen, an der die Turbinenlaufschaufeln mittels ihres Schaufelfußes befestigt sind, was in der US 2004/148943 A1 gezeigt ist. Zur Strömungsführung des Arbeitsmediums in der Turbineneinheit sind zudem üblicherweise zwischen benachbarten Laufschaufelreihen mit dem Turbinengehäuse verbundene und zu Leitschaufelreihen zusammengefasste Turbinenleitschaufeln angeordnet. Gemäß der US 2004/128943 A1 werden die Laufschaufeln der letzten Turbinenstufe mit Kühlluft versorgt, die durch die Leitschaufeln und durch in den Rotorscheiben angeordnete Passagen geführt wird.

Der Luftverdichter einer derartigen Gasturbine ist in konstruktiver Hinsicht üblicherweise analog zur Turbineneinheit aufgebaut und umfasst in einer Ausgestaltung als Axialverdichter eine Mehrzahl von zu Leitschaufelreihen zusammengefassten, jeweils an einem Leitschaufelträger befestigten Verdichterleitschaufeln und eine Mehrzahl von zu Laufschaufelreihen zusammengefassten, jeweils an einer Verdichterwelle befestigten Verdichterlaufschaufeln. Eine Laufschaufelreihe und eine ihr in Strömungsrichtung des Strömungsmediums (hier: Luft) gesehen unmittelbar nachfolgende Leitschaufelreihe bilden dabei eine Verdichterstufe. In der Regel sind mehrere Verdichterstufen vorgesehen.

Die Gesamtheit aller rotierenden Teile der Gasturbine - insbesondere Welle und Laufschaufeln - wird auch als Rotor bezeichnet, die feststehenden Teile - insbesondere Gehäuse und Leitschaufeln - werden insgesamt auch als Stator bezeichnet.

Die Verdichterwelle setzt sich üblicherweise aus einer Mehrzahl von in Achsrichtung gesehen hintereinander angeordneten und beispielsweise durch einen Zuganker zusammengehaltenen Verdichterscheiben zusammen. In Richtung zur Turbineneinheit hin setzt sich die Verdichterwelle über ein Wellenzwischenstück als Turbinenwelle fort. Jede der Verdichterscheiben trägt üblicherweise an ihrem Umfang die Verdichterlaufschaufeln einer Laufschaufelreihe, welche beispielsweise mit Hilfe von Schaufelfüßen in entsprechenden Befestigungsnuten der Verdichterscheibe befestigt sind. Eine Verdichterscheibe kann auch mehrere Laufschaufelreihen tragen.

Zwischen je zwei aufeinander folgenden Verdichterscheiben sind üblicherweise ringförmige Hohlräume, im Folgenden jeweils auch als Kavität bezeichnet, vorgesehen, wodurch das Gesamtgewicht der Verdichterwelle gegenüber einer vollständig massiven Bauweise verringert ist. Die in Strömungsrichtung des Strömungsmediums gesehen letzte Verdichterscheibe weist bei einer gebräuchlichen Bauart eine zur nachfolgenden Turbineneinheit hin zeigende Kopf- oder Stirnfläche auf, die beispielsweise zusammen mit anderen Komponenten einen vom Strömungskanal für das Strömungsmedium abgetrennten hinteren Hohlraum, auch als hintere Kavität bezeichnet, begrenzt bzw. zumindest teilweise umschließt. Eine derartige Ausgestaltung ist beispielsweise aus der EP 1 640 587 Bl bekannt (vergleiche dort FIG 2). Es können auch mehrere Gruppen von Hohlräumen in der Verdichterwelle vorgesehen sein, wobei beispielsweise die Hohlräume einer ersten Gruppe in radialer Richtung gesehen weiter außen liegen, wohingegen die Hohlräume einer zweiten und gegebenenfalls von weiteren Gruppen weiter innen liegen.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades lässt sich dabei aus thermodynamischen Gründen grundsätzlich durch eine Erhöhung der Austrittstemperatur erreichen, mit der Arbeitsmedium aus der Brennkammer ab- und in die Turbineneinheit einströmt. Dabei werden vergleichsweise hohe Temperaturen des Arbeitsmediums von beispielsweise 1200°C und mehr für derartige Gasturbinen angestrebt und auch erreicht. Damit derart hohe Temperaturen bzw. entsprechend hohe Wirkungsgrade erreicht werden können, sollte die Luft im Verdichter möglichst stark verdichtet werden. Bedingt durch den entlang der Strömungsrichtung des Gases immer weiter steigenden Verdichterdruck im Verdichter steigt damit einhergehend auch die Temperatur am Verdichterende. Dabei wird unter Umständen die maximal zulässige Betriebstemperatur des Materials der hinteren Verdichterscheiben erreicht.

Derzeit stellt die für verfügbare Materialien maximal zulässige Betriebstemperatur eine limitierende Randbedingung für die Entwicklung von Gasturbinen in Hinblick auf die Verdichterendtemperatur dar. Besteht die Gefahr eines Überschreitens dieser Grenze, beispielsweise bei hoher Umgebungstemperatur, muss die Fahrweise der Maschine gedrosselt werden. Damit kann das Potenzial der Gasturbine nicht vollständig ausgenutzt werden.

Im Hause der Anmelderin wurden technische Lösungen entwickelt, durch die die in Strömungsrichtung des Strömungsmediums gesehen letzte Verdichterscheibe, insbesondere in deren Kopf- bzw. Stirnbereich, durch Beaufschlagung mit Kühlluft gekühlt wird. Dazu wird beispielsweise ein Kühlluftkühler eingesetzt, der maßgeblich zur Versorgung der vorderen Turbinenbeschaufelung mit herunter gekühlter Kühlluft dient. Diese Kühlluft wird durch das so genannte Shaftcover, nämlich eine in Strömungsrichtung des Strömungsmediums gesehen hinter dem Luftverdichter angeordnete Wellenabdeckung oder -umhüllung, in den Rotor gespeist. Von dort aus gelangt die Kühlluft dann in die Turbinenbeschaufelung. Ein Teil dieser Kühlluft wird dabei zur Kühlung des Kopfbereichs der letzten Verdichterscheibe aus dem Shaftcover in die Kavität hinter der letzten Verdichterscheibe geleitet.

Nachteilig bei dieser Form der Kühlluftführung ist, dass die Kühlluft für die Kavität einen relativ langen Weg durch verschiedene Komponenten der Gasturbine, nämlich zunächst durch die Zuleitung zum Shaftcover und anschließend durch das Shaftcover selber, zurücklegt, die von warmer Verdichterluft umspült werden. Dadurch steigt die Temperatur der Kühlluft deutlich an, bevor sie die Kavität erreicht, wodurch das Kühlpotenzial für die letzte Verdichterscheibe stark verringert wird. Weiterhin wird die letzte Verdichterscheibe nur von einer Seite her gekühlt, und die in Strömungsrichtung des Strömungsmediums gesehen weiter davor liegenden Verdichterscheiben - die zwar nicht ganz so hoch wie die letzte Verdichterscheibe, aber durchaus nennenswert thermisch belastet sind - unter Umständen gar nicht. EP 1640587 offenbart einen Axialverdichter nach dem Oberbegriff des Anspruchs 1.

Der Erfindung liegt die Aufgabe zu Grunde, einen Axialverdichter der oben genannten Art derart weiter zu entwickeln, dass mit einfach gehaltenen Mitteln eine effektive Kühlung der hinteren Verdichterscheiben, der in Strömungsrichtung des Strömungsmediums gesehen letzten Verdichterscheibe, erreicht wird.

In Bezug auf den Axialverdichter wird diese Aufgabe erfindungsgemäß durch die Merkmale des kennzeichnenden Teils des Anspruchs 1 gelöst.

Die Erfindung geht dabei von der Überlegung aus, dass eine besonders wirkungsvolle Kühlung der in Strömungsrichtung des Strömungsmediums gesehen hinteren Verdichterscheiben, insbesondere der letzten Verdichterscheibe, erreicht werden kann, indem sie an zumindest einer ihrer beiden Kopf- oder Stirnseiten, vorzugsweise an beiden Kopf- oder Stirnseiten, mit Kühlmittel von vergleichsweise niedriger Temperatur beaufschlagt wird. Dabei sollte vermieden werden, dass sich das in den angrenzenden Hohlraum eingeleitete Kühlmittel auf seinem Weg in den Hohlraum allzu sehr erwärmt.

Dazu wird erfindungsgemäß das Kühlmittel einem an die zu kühlenden Verdichterscheiben angrenzenden oder benachbarten Hohlraum über zumindest eine der Verdichterleitschaufeln der dem Hohlraum in Radialrichtung unmittelbar gegenüber liegenden Leitschaufelreihe zugeleitet. Da diese Leitschaufelreihe und der zu kühlende Hohlraum in Axialrichtung gesehen sich im Wesentlichen an gleicher Position befinden, erfolgt die Zuleitung des Kühlmittels im Wesentlichen in Radialrichtung von außen nach innen, so dass vergleichsweise lange Transport- bzw. Zufuhrwege in Axialrichtung durch verschiedene heiße Komponenten der Gasturbine, in denen eine unerwünschte Aufheizung des Kühlmittels erfolgen könnte, vermieden werden.

Die Einleitung des Kühlmittels erfolgt zunächst also über die Verdichterleitschaufeln in einen der zwischen zwei Verdichterscheiben liegenden vorderen Hohlräume, etwa in den in Strömungsrichtung des Strömungsmediums gesehen vor der letzten Verdichterscheibe - und damit in der Regel vor der letzten Laufschaufelreihe - liegenden Hohlraum. Aus diesem Hohlraum wird das Kühlmittel dann über zumindest einen durch die nachfolgende(n) Verdichterscheibe(n) hindurch geführten Kühlmittelüberströmkanal, im Folgenden auch kurz Überströmkanal genannt, in den hinteren Hohlraum hinter der letzten Verdichterscheibe geleitet, so dass dieser Bereich mit den daran angrenzenden Komponenten ebenfalls gekühlt wird. Die letzte Verdichterscheibe wird damit beidseitig, d. h. an beiden Kopf- oder Stirnseiten gekühlt. Aus dem hinteren Hohlraum kann das "verbrauchte" Kühlmittel schließlich durch Spaltleckage oder auf andere Weise in den Strömungskanal für das zu verdichtende Strömungsmedium und/oder in nachgeschaltete Kühlmittelabfuhrkanäle oder dergleichen abströmen.

Der jeweilige Überströmkanal kann dazu vorteilhafterweise nach Art einer Axialbohrung in die letzte Verdichterscheibe eingebracht sein. Für den Fall, dass das Kühlmittel über die Verdichterleitschaufeln in einen weiter vorne in der Verdichterwelle angeordneten Hohlraum eingeleitet und dann über eine Anzahl von strömungsmäßig dazwischen geschalteten Hohlräumen in den hinteren Hohlraum geleitet wird, sind zweckmäßigerweise entsprechende Überströmkanäle durch sämtliche dazwischen liegenden Verdichterscheiben vorzusehen.

Zweckmäßigerweise kommt als Kühlmittel Kühlluft zu Einsatz, die beispielsweise dem Verdichterluftstrom weiter stromaufwärts in einer kälteren Region des Verdichters als Teilstrom entnommen wird. Alternativ oder zusätzlich kann auch eine Rückkühlung der Kühlluft durch externe Kühlluftkühler oder dergleichen vorgesehen sein.

Zur Verwirklichung des Erfindungsprinzips reicht es aus, wenn lediglich eine einzige der Verdichterleitschaufeln der entsprechenden Leitschaufelreihe mit einem Kühlmittelzufuhrkanal der genannten Art versehen ist. Für eine besonders wirkungsvolle und gleichmäßige Kühlung der hinteren Verdichterscheiben sind jedoch vorzugsweise in Umfangsrichtung gesehen mehrere, bevorzugt sämtliche, der Verdichterleitschaufeln der zur Kühlmitteleinleitung vorgesehenen Leitschaufelreihe mit entsprechenden Kühlmittelzufuhrkanälen ausgestattet.

Aus demselben Grund sind zweckmäßigerweise für jede der betroffenen Verdichterscheiben in Umfangsrichtung gesehen mehrere Überströmkanäle vorgesehen, die insbesondere kühlmittelseitig parallel geschaltet sind. Der jeweilige Überströmkanal kann dabei insbesondere nach Art einer Axialbohrung durch die entsprechende Verdichterscheibe hindurch geführt sein.

Bei der oben genannten Ausgestaltung ist es zweckmäßig, wenn eine ringförmige Kühlmittelverteilerkammer in dem Leitschaufelträger oder in einer umliegenden Gehäusekomponente vorgesehen ist, an die die in den Verdichterleitschaufeln angeordneten Abschnitte der Kühlmittelzufuhrkanäle angeschlossen sind.

In weiterer vorteilhafter Ausgestaltung sind die Verdichterleitschaufeln der zur Kühlmittelzufuhr vorgesehenen Leitschaufelreihe an ihrem Kopfende mit einem gemeinsamen Ringkörper verbunden, der einerseits mit seiner Außenfläche einen Strömungskanal für das an dieser Stelle vergleichsweise heiße Strömungsmedium begrenzt, und der andererseits mit seiner Innenfläche den zu kühlenden Hohlraum, in den die Kühlmitteleinleitung erfolgt, begrenzt. Der nach Art eines Deckbandes ausgeführte Ringkörper dichtet somit den Hohlraum gegenüber dem Strömungskanal ab und isoliert beide Raumbereiche thermisch voneinander.

Dabei ist der jeweilige Kühlmittelzufuhrkanal zweckmäßigerweise durch den Ringkörper hindurch geführt, so dass die Kühlmittelaustrittsöffnung sich an seiner dem Hohlraum zugewandten Innenfläche befindet.

In weiterer zweckmäßiger Ausgestaltung kann der hintere Hohlraum auf der der hinteren Stirnfläche der letzten Verdichterscheibe gegenüber liegenden Seite durch eine Stirnfläche einer beispielsweise ring- oder hohlzylinderförmigen Rotorabdeckung (Shaftcover) begrenzt sein. Die Stirnfläche der Rotorabdeckung wird dabei im Betrieb durch das über den Überströmkanal in den hinteren Hohlraum überströmende Kühlmittel ebenfalls gekühlt.

Besonders bevorzugt ist der Einsatz des beschriebenen Axialverdichters als Luftverdichter in einer Gasturbine, wobei vorteilhafterweise der Luftverdichter und die Turbineneinheit der Gasturbine entlang einer gemeinsamen Welle angeordnet sind. Es ist aber selbstverständlich auch denkbar, den Axialverdichter als eigenständiges Gerät für andere Einsatzzwecke, bei denen ein Strömungsmedium verdichtet werden soll, zu betreiben. Die genannten Vorteile der verbesserten Kühlung der Verdichterendregion kommen auch in diesem Fall zum Tragen.

Die mit der Erfindung verbundenen Vorteile bestehen insbesondere darin, dass bei einem Axialverdichter durch eine im Wesentlichen in radialer Richtung über eine räumlich benachbarte Leitschaufelreihe erfolgende Zuleitung von Kühlmittel eine effektive Kühlung der thermisch besonders belasteten hinteren Verdichterscheiben und der angrenzenden Komponenten ermöglicht ist. Daraus resultiert eine geringere thermische Belastung der hinteren Verdichterscheiben bzw. eine mögliche Erhöhung des Verdichterenddrucks bei gleichbleibender Belastung der Verdichterscheiben.

Ein Ausführungsbeispiel der Erfindung wird anhand einer Zeichnung näher erläutert. Darin zeigen:
FIG 1 einen Halbschnitt durch eine Gasturbine,
FIG 2 einen vergrößerten Ausschnitt des Verdichters der Gasturbine gemäß FIG 1 mit einer bislang vorgesehenen Kühlvorrichtung zur Kühlung der letzten Verdichterscheibe, und
FIG 3 einen Ausschnitt aus FIG 1 mit einer gegenüber FIG 2 verbesserten Kühlvorrichtung zur Kühlung der hinteren Verdichterscheiben.

Gleiche Teile sind in allen Figuren mit denselben Bezugszeichen versehen.

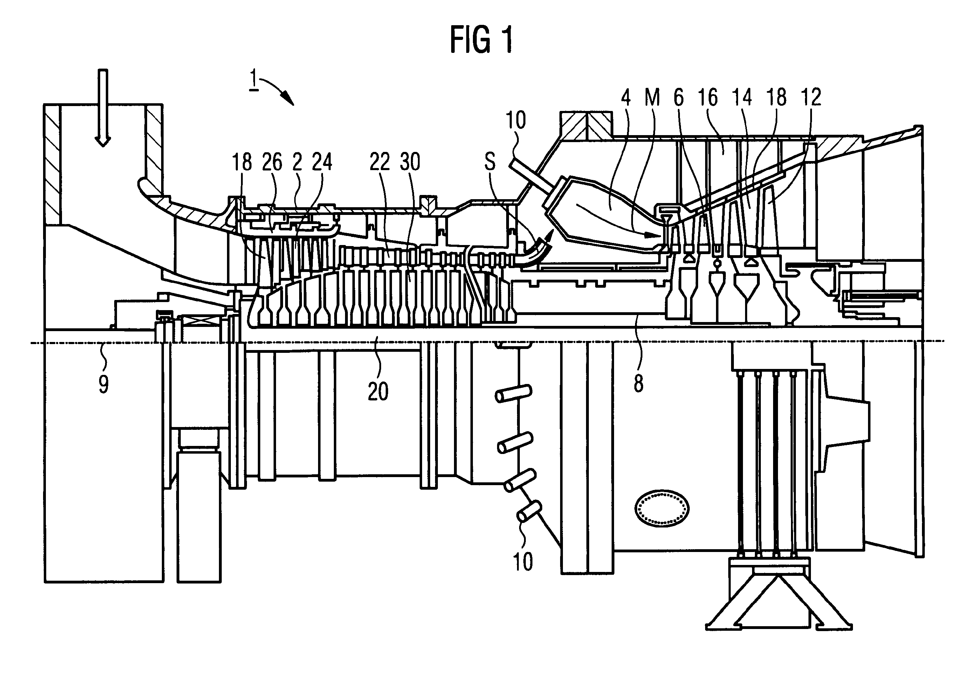

Die Gasturbine 1 gemäß FIG 1 weist einen Verdichter 2 für Verbrennungsluft, eine Brennkammer 4 sowie eine Turbineneinheit 6 zum Antrieb des Verdichters 2 und eines nicht dargestellten Generators oder einer Arbeitsmaschine auf. Dazu sind die Turbineneinheit 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist. Die in der Art einer Ringbrennkammer ausgeführte Brennkammer 4 ist mit einer Anzahl von Brennern 10 zur Verbrennung eines flüssigen oder gasförmigen Brennstoffs bestückt.

Die Turbineneinheit 6 weist eine Anzahl von mit der Turbinenwelle 8 verbundenen, rotierbaren Turbinenlaufschaufeln 12 auf. Die Turbinenlaufschaufeln 12 sind kranzförmig an der Turbinenwelle 8 angeordnet und bilden somit eine Anzahl von Laufschaufelreihen. Weiterhin umfasst die Turbineneinheit 6 eine Anzahl von feststehenden Turbinenleitschaufeln 14, die ebenfalls kranzförmig unter der Bildung von Leitschaufelreihen an einem Leitschaufelträger 16 der Turbineneinheit 6 befestigt sind. Die Turbinenlaufschaufeln 12 dienen dabei zum Antrieb der Turbinenwelle 8 durch Impulsübertrag vom die Turbineneinheit 6 durchströmenden Arbeitsmedium M. Die Turbinenleitschaufeln 14 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Turbinenleitschaufeln 14 oder einer Leitschaufelreihe und aus einem Kranz von Turbinenlaufschaufeln 12 oder einer Laufschaufelreihe wird dabei auch als Turbinenstufe bezeichnet.

Der Verdichter 2 der Gasturbine 1 ist ähnlich aufgebaut wie die Turbineneinheit 6. Er umfasst eine Mehrzahl von zu Laufschaufelreihen zusammengefassten Verdichterlaufschaufeln 18, die mit ihren Schaufelfüßen an der Turbinenwelle 8, in diesem Abschnitt der Gasturbine 1 als Verdichterwelle 20 bezeichnet, befestigt sind, und die in einen Strömungskanal 22 für das das angesaugte Strömungsmedium S, hier Luft, hineinragen. Die über die Verdichterwelle 20 in Rotation versetzten Verdichterlaufschaufeln 18 verrichten an dem Strömungsmedium S Verdichtungsarbeit und fördern es in Richtung zur Turbineneinheit 8. Die zu Leitschaufelreihen zusammengefassten, feststehenden Verdichterleitschaufeln 24 dienen hingegen zur Strömungsführung des Strömungsmediums S zwischen jeweils zwei in Strömungsrichtung des Strömungsmediums gesehen aufeinander folgenden Laufschaufelreihen. Die Verdichterleitschaufeln 24 sind an zugehörigen Leitschaufelträgern 26 befestigt, die ihrerseits in nicht dargestellter Weise mit dem äußeren Verdichtergehäuse verbunden sind, und die - gegebenenfalls gemeinsam mit weiteren Ringsegmenten - die äußere Begrenzung des Strömungskanals 22 bilden. Die Leitschaufelträger 26 können aus mehreren Segmenten zusammengesetzt sein. Ein aufeinander folgendes Paar aus einem Kranz von Verdichterlaufschaufeln 18 oder einer Laufschaufelreihe und aus einem Kranz von Verdichterleitschaufeln 24 oder einer Leitschaufelreihe wird dabei auch als Verdichterstufe bezeichnet.

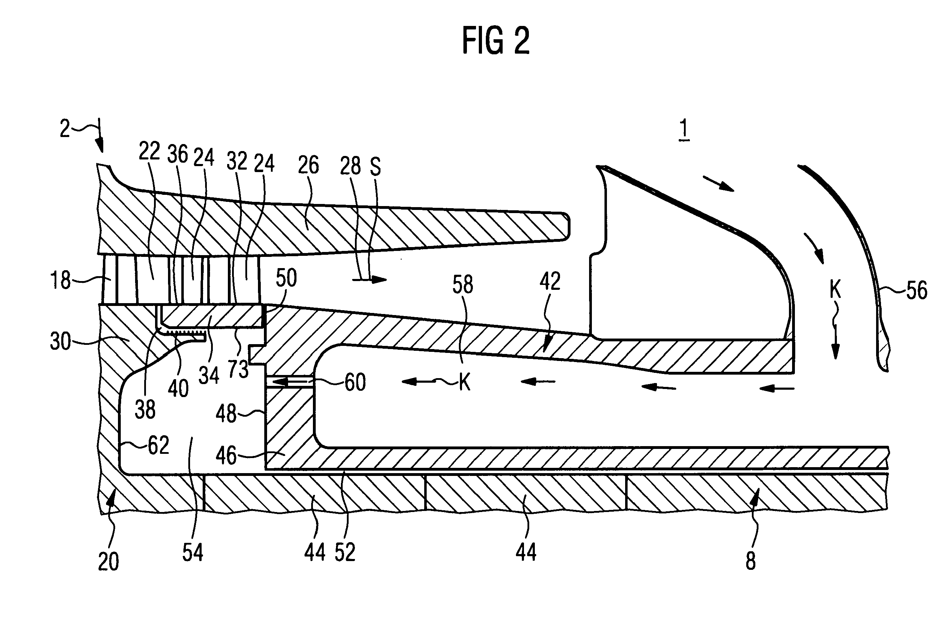

FIG 2 zeigt in vergrößerter Darstellung die End- oder Austrittsregion des Verdichters 2 und den sich in Strömungsrichtung 28 des Strömungsmediums S anschließenden Übergangsbereich zur Brennkammer 4 und zur Turbineneinheit 6.

Die Verdichterwelle 20 ist aus mehreren stapelartig hintereinander angeordneten Verdichterscheiben 30 zusammengesetzt, von denen in FIG 2 nur eine einzige, nämlich die in Strömungsrichtung 28 des Strömungsmediums S gesehen hintere oder letzte Verdichterscheibe 30 sichtbar ist. Die jeweilige Verdichterscheibe 30 trägt an ihrem Umfang die Verdichterlaufschaufeln 18 der zugehörigen Laufschaufelreihe. Die Umfangsfläche der jeweiligen Verdichterscheibe 30 bildet in ihrem Erstreckungsbereich zugleich die innere Begrenzung des Strömungskanals 22. In den Zwischenbereichen, in denen die Verdichterleitschaufeln 24 angeordnet sind, wird die innere Begrenzung des Strömungskanals 22 hingegen jeweils von der Außenseite 32 eines Ringkörpers 34 gebildet, der mit den Kopfenden 36 der Verdichterleitschaufeln 24 der zugehörigen Leitschaufelreihe verbunden ist. Der zwischen dem jeweiligen - räumlich feststehenden - Ringkörper 34 und der in Axialrichtung angrenzenden - rotierenden - Verdichterscheibe 30 befindliche Ringspalt 38 kann in herkömmlicher Weise beispielsweise durch eine Labyrinthdichtung 40 abgedichtet sein.

Bei der Ausgestaltung gemäß FIG 2 umfasst die letzte Verdichterstufe hinter der letzten Laufschaufelreihe zwei unmittelbar aufeinanderfolgende Leitschaufelreihen (so genannte Doppelreihenanordnung), denen ein gemeinsamer Ringkörper 34 zugeordnet ist. Auf dieses Detail kommt es aber vorliegend nicht an.

In Richtung zur Brennkammer 4 hin erweitert sich der Strömungskanal 22 für das im Verdichter 2 verdichtete Strömungsmedium S nach Art eines Diffusors. Die innere Begrenzung des Strömungskanals 22 wird in diesen Bereich durch die Umfangsfläche einer ringförmigen Wellenabdeckung 42, das so genannte Shaftcover, gebildet. Die feststehende Wellenabdeckung 48 umgibt die rotierende Turbinenwelle 8, die sich als Verlängerung der Verdichterwelle 20 zur Turbineneinheit 6 hin erstreckt, und die aus einzelnen Wellensegmenten 44 oder Scheiben zusammengesetzt sein kann. In axialer Richtung zum Verdichter 2 hin erstreckt sich die Wellenabdeckung 42 fast bis zu dem Ringkörper 34 der letzten (Doppel-) Leitschaufelreihe. An der zum Verdichter 2 hin gerichteten Stirnseite weist die Wellendeckung 42 einen Ringflansch 46 mit einer Stirnfläche 48 auf, die gegenüber dem Ringkörper 34 durch einen axialen Ringspalt 50 beabstandet ist. Zur Turbinenwelle 8 hin ist der Ringflansch 46 durch einen weiteren, hier radialen Ringspalt 52 beabstandet. Der Ringspalt 50 kann wie der Ringspalt 38 mit geeigneten Abdichtungsmitteln versehen sein, um ein Überströmen des am Verdichteraustritt vergleichsweise heißen Strömungsmediums S vom Strömungskanal 22 in den von der letzten Verdichterscheibe 30, dem Ringkörper 34, dem Ringflansch 46 und dem entsprechenden Abschnitt der Turbinenwelle 8 begrenzten bzw. umschlossenen Hohlraum 54, auch als Kavität bezeichnet, zu verhindern.

Trotz dieser Abdichtungsmaßnahmen können die an den Hohlraum 54 angrenzenden Komponenten, insbesondere die letzte Verdichterscheibe 30, beim Betrieb der Gasturbine 1 bzw. des Verdichters 2 einer erheblichen thermischen Belastung ausgesetzt sein. Zur Verringerung dieser Belastung ist bei der Gasturbine 1 gemäß FIG 2 eine Einleitung eines Kühlmittels K, hier Kühlluft, in den Hohlraum 54 vorgesehen. Das Kühlmittel K wird dabei über eine Kühlmittelzuleitung 56 in einen in die Wellenabdeckung 42 integrierten Kühlmittelkanal 58 von beispielsweise zylindrischer Kontur geleitet. Von dort strömt es durch einen oder mehrere in den Ringflansch 46 eingebrachte Überströmkanäle 60 in den Hohlraum 54 ein, so dass die gewünschte Kühlung der letzten Verdichterscheibe 30 nach Art einer Prallkühlung an der Stirnfläche 62 verwirklicht ist. Die Abfuhr des "verbrauchten" Kühlmittels K erfolgt beispielsweise durch Spaltleckage an den Ringspalten 38, 50 und 52.

Bei diesem Kühlungskonzept kann es allerdings nachteilig sein, dass das Kühlmittel auf seinem Weg durch die Kühlmittelzuleitung 56, die aus Platzgründen an der Brennkammer 4 vorbeigeführt ist, und durch den Kühlmittelkanal 58 innerhalb des Gehäuses der Wellenabdeckung 42 - im Gegenstrom zu dem außen an der Wellenabdeckung 42 vorbei strömenden, durch den Verdichter 2 vergleichsweise stark erhitzen Strömungsmedium S - stark aufgewärmt wird und dabei sein Kühlpotenzial zum Teil einbüßt.

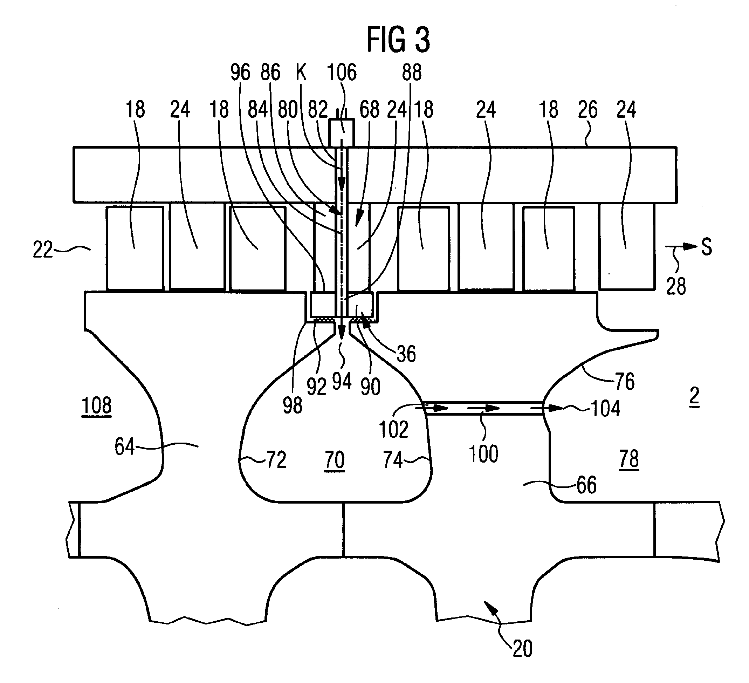

Zur Vermeidung dieses Problems ist bei der Gasturbine 1 gemäß FIG 3 ein alternatives Kühlkonzept vorgesehen. Der Aufbau des Verdichters 2 und der Turbineneinheit 6 entspricht grundsätzlich demjenigen aus FIG 2, so dass an dieser Stelle nur noch auf die Unterschiede eingegangen wird.

Bei der Variante gemäß FIG 3 trägt jede der beiden hinteren Verdichterscheiben 64 und 66 zwei Leitschaufelreihen, was aber hier nicht von entscheidender Bedeutung ist. Zwischen je zwei Laufschaufelreihen und hinter der in Strömungsrichtung des Strömungsmediums S gesehen letzten Laufschaufelreihe befindet sich eine Leitschaufelreihe. Insbesondere befindet sich eine Leitschaufelreihe, nämlich die weiter unten noch im Detail zu beschreibende Kühlmittelzufuhr-Leitschaufelreihe 68, in der Axialregion zwischen der vorletzten Verdichterscheibe 64 und der letzen Verdichterscheibe 66. Zwischen der vorletzten Verdichterscheibe 64 und der letzten Verdichterscheibe 66 befindet sich ein ringförmiger Hohlraum 70, der von der hinteren Stirnfläche 72 der vorletzten Verdichterscheibe 64 und von der vorderen Stirnfläche 74 der letzten Verdichterscheibe 66 begrenzt wird. Die hintere Stirnfläche 76 der letzen Verdichterscheibe 66 begrenzt - zumindest teilweise - einen ringförmigen hinteren Hohlraum 78. Die Hohlräume 70 und 78 befinden sich in radialer Richtung gesehen ungefähr an gleicher Position.

Zur Kühlung des Hohlraums 70 erfolgt eine Zufuhr von Kühlmittel K über eine Anzahl von Verdichterleitschaufeln 24 der Kühlmittelzufuhr-Leitschaufelreihe 68. Dazu ist mindestens ein Kühlmittelzufuhrkanal 80 vorgesehen, der in einem ersten Abschnitt 82 durch den entsprechenden Leitschaufelträger 26 hindurch zu der betreffenden Verdichterleitschaufel 24 geführt ist und sich in einem zweiten Abschnitt 84 im Inneren ihres Schaufelblatts 86 im Wesentlichen in radialer Richtung fortsetzt. Am Kopfende 36 der Verdichterleitschaufel 24 setzt sich der Kühlmittelzufuhrkanal 80 in einem ebenfalls radial verlaufenden Endabschnitt 88 innerhalb des mit der Verdichterleitschaufel 24 verbundenen Ringkörpers 90 fort und endet an der zum Hohlraum 70 gewandten Innenseite 92 des Ringkörpers 90 in einer Austrittsöffnung 94. Ähnlich wie bei der zuvor beschriebenen Variante gemäß FIG 2 dichtet der Ringkörper 90 den Hohlraum 70 gegenüber dem Strömungskanal 22 ab, wobei die Außenseite 96 des Ringkörpers 90 in ihrem Erstreckungsbereich die innere Begrenzung des Strömungskanals 22 bildet. In dem zwischen dem Ringkörper 90 und den angrenzenden Verdichterscheiben 64 und 66 gebildeten Ringspalt 98 können geeignete Wellendichtungen, etwa in Form einer Labyrinthdichtung, angeordnet sein.

Durch den vergleichsweise kurzen und direkten Zuströmweg wird das dem Hohlraum 70 zugeführte Kühlmittel K nur schwach erwärmt und kann somit ein vergleichsweise großes Kühlpotenzial, insbesondere bei der Kühlung der hinteren Stirnfläche 72 der vorletzten Verdichterscheibe 64 und der vorderen Stirnfläche 74 der letzten Verdichterscheibe 66, entfalten.

Aus dem Hohlraum 70 wird das - leicht erwärmte - Kühlmittel K anschließend über einen oder mehrere, vorzugsweise in Umfangsrichtung verteilt angeordnete Kühlmittelüberströmkanäle 100 in den hinteren Hohlraum 78 hinter der letzen Verdichterscheibe 66 geleitet. Dazu ist der jeweilige Kühlmittelüberströmkanal 100 nach Art einer Axialbohrung in die letzte Verdichterscheibe 66 eingebracht. Die jeweilige Axialbohrung verbindet die in der vorderen Stirnfläche 74 der letzen Verdichterscheibe 66 angeordnete Einströmöffnung 102 des Überströmkanals 100 mit der in der hinteren Stirnfläche 76 angeordneten Ausströmöffnung 104. Beim Austritt in den hinteren Hohlraum 78 ist das Kühlmittel K noch kalt genug, um die an den hinteren Hohlraum 78 angrenzenden Komponenten, insbesondere die hintere Stirnfläche 76 der letzen Verdichterscheibe 66, wirkungsvoll zu kühlen.

In einer besonders vorteilhaften Variante erfolgt eine in Umfangsrichtung annähernd gleichmäßige Kühlmittelzufuhr in den als Ringraum ausgestalteten Hohlraum 70 über mehrere der Verdichterleitschaufeln 24 der entsprechenden Leitschaufelreihe 68, wobei beispielsweise in Umfangsrichtung gesehen jede, jede zweite oder auch jede dritte etc. der Verdichterleitschaufeln 24 dieser Leitschaufelreihe 68 mit einem entsprechenden Abschnitt eines Kühlmittelzufuhrkanals 80 und mit einer entsprechenden Austrittsöffnung 94 für Kühlmittel K versehen sein kann. Diese Kanalabschnitte sind also kühlmittelseitig parallel geschaltet und werden beispielsweise über eine in FIG 3 nur schematisch angedeutete, im Leitschaufelträger 26 oder in einer benachbarten Gehäusekomponente angeordnete, in Umfangsrichtung umlaufende Kühlmittelverteilerkammer 106 simultan mit frischem Kühlmittel K bespeist.

Es versteht sich, dass einige der in FIG 3 dargestellten Details nur beispielhaften Charakter haben. Abweichend von der hier gewählten Darstellung können beispielsweise die Ausrichtung des Endabschnitts 88 des Kühlmittelzufuhrkanals 80 und die Lage der Austrittsöffnung 94 variieren. Auch könnte die Kühlmittelzufuhr alternativ oder zusätzlich über eine zugeordnete, vor der Leitschaufelreihe 68 liegende Leitschaufelreihe in einen in Strömungsrichtung des Strömungsmediums S gesehen vor dem Hohlraum 70 liegenden Hohlraum, beispielsweise in den Hohlraum 108, erfolgen. Bei dieser Variante ist der solchermaßen mit Kühlmittel K beaufschlagte vordere Hohlraum 108 seinerseits über zusätzliche Kühlmittelüberströmkanäle (in FIG 3 nicht dargestellt) mittelbar - d. h. über weiter hinten liegende Hohlräume - oder direkt mit dem hinteren Hohlraum 78 verbunden.

Des Weiteren ist es denkbar, die beiden Kühlkonzepte gemäß FIG 2 und FIG 3 miteinander zu kombinieren.

## Patentansprüche

1. Axialverdichter (2) für eine Gasturbine (1) zur Verdichtung eines Strömungsmediums (S) mit einer Mehrzahl von zu Leitschaufelreihen zusammengefassten, jeweils an einem Leitschaufelträger (26) befestigten Verdichterleitschaufeln (24) und mit einer Mehrzahl von zu Laufschaufelreihen zusammengefassten, jeweils an einer Verdichterscheibe (64, 66) einer Verdichterwelle (20) befestigten Verdichterlaufschaufeln (18),
wobei je zwei aufeinander folgende Verdichterscheiben (64, 66) einen dazwischen liegenden Hohlraum (70) umschließen, und
wobei die in Strömungsrichtung des Strömungsmediums (S) gesehen letzte Verdichterscheibe (66) einen hinteren Hohlraum (78) begrenzt, und
mindestens einen durch einen Leitschaufelträger (26) und durch eine an dem Leitschaufelträger (26) befestigte, in Strömungsrichtung des Strömungsmediums (S) gesehen vor der letzten Verdichterscheibe (66) angeordnete Verdichterleitschaufel (24) hindurch führenden Kühlmittelzufuhrkanal (80), **dadurch gekennzeichnet, dass** der Kühlmittelzufuhrkanal an dem der Verdichterwelle (20) zugewandten Kopfende (36) der Verdichterleitschaufel (24) über eine dort angeordnete Austrittsöffnung (94) in einen der zwischen den Verdichterscheiben (64, 66) liegenden Hohlräume (70) mündet,
wobei dieser Hohlraum (70) über mindestens einen durch die nachfolgenden Verdichterscheiben (66) hindurch geführten Kühlmittelüberströmkanal (100) mit dem hinteren Hohlraum (78) verbunden ist.

2. Axialverdichter (2) nach Anspruch 1,
wobei in Umfangsrichtung gesehen mehrere der Verdichterleitschaufeln (24) einer vor der letzten Verdichterscheibe (66) angeordneten Leitschaufelreihe mit entsprechenden Kühlmittelzufuhrkanälen (80) ausgestattet sind.

3. Axialverdichter (2) nach Anspruch 2,
wobei eine ringförmige Kühlmittelverteilerkammer (106) in dem Leitschaufelträger (26) oder in einer umliegenden Gehäusekomponente vorgesehen ist, an die die in den Verdichterleitschaufeln (24) angeordneten Abschnitte der Kühlmittelzufuhrkanäle (80) angeschlossen sind.

4. Axialverdichter (2) nach einem der Ansprüche 1 bis 3,
wobei die Verdichterleitschaufeln (24) der zur Kühlmittelzufuhr vorgesehenen Leitschaufelreihe (68) an ihrem Kopfende (36) mit einem Ringkörper (90) verbunden sind, der einerseits einen Strömungskanal (22) für das Strömungsmedium (S) begrenzt, und der andererseits den ihm zugeordneten Hohlraum (70) gegenüber dem Strömungskanal (22) abdichtet.

5. Axialverdichter (2) nach Anspruch 4,
wobei der jeweilige Kühlmittelzufuhrkanal (80) durch den Ringkörper (90) hindurch geführt ist.

6. Axialverdichter (2) nach einem der Ansprüche 1 bis 5,
wobei der jeweilige Kühlmittelzufuhrkanal (80) in den dem hinteren Hohlraum (78) unmittelbar vorangehenden Hohlraum (70) mündet.

7. Axialverdichter (2) nach einem der Ansprüche 1 bis 6,
wobei der hintere Hohlraum (78) auf der der hinteren Stirnfläche (76) der letzten Verdichterscheibe (66) gegenüberliegenden Seite durch eine Stirnfläche einer ringförmigen Rotorabdeckung begrenzt ist.

8. Gasturbine (2) mit einem Axialverdichter (1) nach einem der Ansprüche 1 bis 7.

## Claims

1. Axial compressor (2) for a gas turbine (1) for compressing a flow medium (S), having a multiplicity of compressor stator blades (24), which are assembled to form stator blade rows and are fastened in each case on a stator blade carrier (26), and having a multiplicity of compressor rotor blades (18), which are assembled to form rotor blade rows and are fastened in each case on a compressor disk (64, 66) of a compressor shaft (20),
wherein two consecutive compressor disks (64, 66) in each case enclose a hollow space (70) lying between them,
and
wherein the last compressor disk (66), as seen in the flow direction of the flow medium (S), delimits a rear hollow space (78), and
at least one cooling medium feed duct (80) which leads through a stator blade carrier (26) and through a compressor stator blade (24) fastened on the stator blade carrier (26) and arranged upstream of the last compressor disk (66), as seen in the flow direction of the flow medium (S), **characterized in that** the cooling medium feed duct, at the tip end (36) of the compressor stator blade (24) facing the compressor shaft (20), via a discharge opening (94) arranged there, opens into one of the hollow spaces (70) lying between the compressor disks (64, 66),
wherein this hollow space (70), via at least one cooling medium transfer passage (100) which is led through the subsequent compressor disks (66), is connected to the rear hollow space (78).

2. Axial compressor (2) according to Claim 1,
wherein a plurality of the compressor stator blades (24) of a stator blade row which is arranged upstream of the last compressor disk (66), as seen in the circumferential direction, are equipped with corresponding cooling medium feed ducts (80).

3. Axial compressor (2) according to Claim 2,
wherein provision is made in the stator blade carrier (26) or in an encompassing casing component for an annular cooling medium distribution chamber (106), to which are connected the sections of the cooling medium feed ducts (80) which are arranged in the compressor stator blades (24).

4. Axial compressor (2) according to one of Claims 1 to 3,
wherein the compressor stator blades (24) of the stator blade row (68) which is provided for the feed of cooling medium are connected at their tip end (36) to an annular body (90) which on one side delimits a flow passage (22) for the flow medium (S), and on the other side seals the hollow space (70), which is associated with it, in relation to the flow passage (22).

5. Axial compressor (2) according to Claim 4,
wherein the respective cooling medium feed duct (80) is led through the annular body (90).

6. Axial compressor (2) according to one of Claims 1 to 5,
wherein the respective cooling medium feed duct (80) opens into the hollow space (70) which directly precedes the rear hollow space (78).

7. Axial compressor (2) according to one of Claims 1 to 6,
wherein the rear hollow space (78), on the side lying opposite the rear end face (76) of the last compressor disk (66), is delimited by an end face of an annular rotor cover.

8. Gas turbine (1) having an axial compressor (2) according to one of Claims 1 to 7.

## Revendications

1. Compresseur ( 2 ) axial pour une turbine ( 1 ) à gaz pour la compression d'un fluide ( S ) en écoulement, ayant une multiplicité d'aubes ( 4 ) directrices de compresseur réunies en des rangées d'aubes directrices et fixées respectivement à un support ( 26 ) d'aubes directrices et comprenant une multiplicité d'aubes ( 18 ) mobiles de compresseur rassemblées en des rangées d'aubes mobiles et fixées respectivement à un disque ( 64, 66 ) de compresseur d'un arbre ( 30 ) de compresseur,
dans lequel deux disques ( 64, 66 ) de compresseur successifs enferment un espace ( 70 ) vide entre eux, et
dans lequel le disque ( 66 ) de compresseur, le dernier, considéré dans le sens d'écoulement du fluide ( S ) en écoulement, délimite un espace ( 78 ) vide arrière, et
au moins un canal ( 80 ) d'amenée de fluide de refroidissement traversant une aube ( 24 ) directrice du compresseur fixée au support ( 26 ) d'aubes directrices est disposé, considéré dans le sens d'écoulement du fluide ( S ) en écoulement, avant le dernier disque ( 66 ) de compresseur, **caractérisé en ce que** le canal d'amenée de fluide de refroidissement débouche à l'extrémité ( 36 ) de tête, tournée vers l'arbre ( 20 ) du compresseur, de l'aube ( 24 ) directrice de compresseur, par l'intermédiaire d'une ouverture ( 94 ) de sortie, qui y est disposée, dans des espaces ( 70 ) vides se trouvant entre les disques ( 64, 66 ) de compresseur,
dans lequel cet espace ( 70 ) vide communique avec l'espace ( 78 ) vide arrière par au moins un canal ( 100 ) de passage du fluide de refroidissement traversant les disques ( 66 ) de compresseur suivants.

2. Compresseur axial suivant la revendication 1,
dans lequel, considéré dans la direction périphérique, plusieurs des aubes ( 24 ) directrices du compresseur d'une rangée d'aubes directrices disposée avant le dernier disque ( 66 ) du compresseur sont équipées de canaux ( 80 ) correspondants d'amenée de fluide de refroidissement.

3. Compresseur axial suivant la revendication 2,
dans lequel une chambre ( 106 ) annulaire de répartition de fluide de refroidissement est prévue dans le support ( 26 ) d'aubes directrices ou dans un élément de carter autour, auquel les tronçons, disposés dans les aubes ( 24 ) directrices du compresseur, des canaux ( 80 ) d'amenée de fluide de refroidissement, sont raccordés.

4. Compresseur axial suivant l'une des revendications 1 à 3,
dans lequel les aubes ( 24 ) directrices du compresseur de la rangée ( 68 ) d'aubes directrices prévue pour l'amenée du fluide de refroidissement sont reliées à leur extrémité ( 36 ) de tête à un corps ( 90 ) annulaire, qui, d'une part, délimite un canal ( 22 ) d'écoulement du fluide ( S ) en écoulement et qui, d'autre part, rend étanche l'espace ( 70 ) vide qui lui est associé par rapport au canal ( 22 ) d'écoulement.

5. Compresseur axial suivant la revendication 4,
**caractérisé en ce que** le canal ( 80 ) respectif d'amenée de fluide de refroidissement passe à travers le corps ( 90 ) annulaire.

6. Compresseur axial suivant l'une des revendications 1 à 5,
dans lequel le canal ( 80 ) respectif d'amenée de fluide de refroidissement débouche dans l'espace ( 70 ) vide précédant immédiatement l'espace ( 78 ) vide arrière.

7. Compresseur axial suivant l'une des revendications 1 à 6,
dans lequel l'espace ( 78 ) vide arrière est délimité du côté opposé à la surface ( 76 ) frontale arrière du dernier disque ( 66 ) de compresseur par une surface frontale d'un recouvrement annulaire de rotor.

8. Turbine ( 2 ) à gaz ayant un compresseur ( 1 ) axial suivant l'une des revendications 1 à 7.
